Europäisches Patentamt

European Patent Office

Office européen des brevets

(19)

(11)  **EP 1 524 658 A1**

(12)  **EUROPEAN PATENT APPLICATION**
published in accordance with Art. 158(3) EPC

(43) Date of publication:
    **20.04.2005  Bulletin 2005/16**

(51) Int Cl.⁷: **G11B 11/105**

(21) Application number: **02760623.5**

(86) International application number:
    **PCT/JP2002/008252**

(22) Date of filing: **13.08.2002**

(87) International publication number:
    **WO 2004/017317 (26.02.2004 Gazette 2004/09)**

(84) Designated Contracting States:
    **AT BE BG CH CY CZ DE DK EE ES FI FR GB GR
    IE IT LI LU MC NL PT SE SK TR**
    Designated Extension States:
    **AL LT LV MK RO SI**

(71) Applicant: **FUJITSU LIMITED
    Kawasaki-shi, Kanagawa 211-8588 (JP)**

(72) Inventor: **HOSOKAWA, Tetsuo,
    c/o Yamagata Fujitsu Limited
    Higashine-shi, Yamagata 999-3701 (JP)**

(74) Representative: **Fenlon, Christine Lesley
    Haseltine Lake & Co.,
    Imperial House,
    15-19 Kingsway
    London WC2B 6UD (GB)**

(54)  **MAGNETO-OPTICAL RECORDING MEDIUM AND MAGNETO-OPTICAL STORAGE DEVICE**

(57)  Disclosed herein is a magneto-optical recording medium including a substrate, a first recording layer provided on the substrate, and a second recording layer provided on the first recording layer. The first recording layer contains Tb and FeCo as principal components and shows a compensation composition or transition metal dominance and perpendicular magnetization at room temperature. The second recording layer has a compensation temperature of not less than 100°C and shows rare-earth element dominance and perpendicular magnetization at room temperature. The Curie temperatures Tc1 and Tc2 of the first and second recording layers, the coercive forces Hc1 and Hc2 of the first and second recording layers at room temperature, and the thicknesses t1 and t2 of the first and second recording layers satisfy the relations of 60°C < Tc2 < Tc1 and Hc1 · t1 > Hc2 · t2.

# F I G . 2

2A

| Layer | Ref |
|---|---|
| SUBSTRATE | 4 |
| SiN | 6 |
| FIRST REPRODUCING LAYER (GdFeCo) | 8 |
| SECOND REPRODUCING LAYER (GdFe) | 10 |
| NONMAGNETIC LAYER (SiN) | 12 |
| FIRST RECORDING LAYER (TbFeCo) | 14 |
| RECORDING ASSIST LAYER (GdFeCo) | 16 |
| SECOND RECORDING LAYER (DyFeCo) | 22 |
| SiN | 18 |
| Al | 20 |

EP 1 524 658 A1

## Description

Technical Field

The present invention relates generally to a magneto-optical recording medium, and more particularly to a magneto-optical recording medium suitable for high-density recording.

Background Art

A method of shortening the wavelength of a laser to be used in recording or reproducing data is investigated as one method for increasing a recording density on an optical disk. For example, the wavelength of a laser used in a 3.5-inch magneto-optical disk drive at present is 650 nm. A blue laser having a wavelength of 405 nm is used instead, and the diameter of a beam spot can be reduced from about 1.0 $\mu$m to 0.65 $\mu$m, thereby allowing high-density recording.

A magneto-optical disk is known as a high-density recording medium, and an increase in its recording density is demanded with an increase in quantity of information. Increasing the recording density of the medium can be realized by shortening the space between adjacent recording marks. However, the reproduction of each recording mark is limited by the size of a light beam (beam spot) on the medium. In the case that the density of the recording marks is set so that only one recording mark is present inside the beam spot, an output waveform corresponding to "1" or "0" can be observed as a reproduced signal according to whether or not the recording mark is present inside the beam spot.

However, in the case that the density of the recording marks is increased so that a plurality of recording marks are present inside the beam spot, the reproduced output does not change irrespective of movement of the beam spot on the medium. As a result, the output waveform becomes linear and the presence or absence of recording marks cannot be distinguished. The reproduction of such small recording marks having a period shorter than the size of the beam spot may be effected by reducing the size of the beam spot. However, the size of the beam spot is limited by the wavelength $\lambda$ of light output from a light source and the numerical aperture NA of an objective lens, so that the spot size cannot be sufficiently reduced.

Recently commercially available is a magneto-optical disk drive adopting a reproducing method using a magnetically induced super-resolution (MSR) technique for reproducing a recording mark smaller than the size of the beam spot by the use of an existing optical system. The MSR is a reproducing method such that while one mark present inside the beam spot is being reproduced, another mark is masked to thereby increase a reproductive resolution. Accordingly, such an MSR medium requires at least a mask layer or reproducing layer for masking the other mark so that the one mark is reproduced during signal reproduction, in addition to a recording layer for recording marks.

For example, there has been proposed a CAD (Center Aperture Detection) type MSR medium such that a nonmagnetic layer is interposed between a reproducing layer and a recording layer, and a recorded mark in the recording layer is transferred to the reproducing layer by magnetostatic coupling to thereby reproduce information. A longitudinally magnetized film having an axis of easy magnetization in a longitudinal direction at room temperature is used as the reproducing layer, and the recorded mark in the recording layer at only a portion heated to a high temperature by the irradiation with a laser beam is transferred to the reproducing layer to thereby mask the other portion except the above heated portion for reproduction by means of the reproducing layer, thus allowing super-resolution reproduction. In the CAD medium, longitudinal magnetization in the reproducing layer at the other portion except the aperture portion is not detected, and it is resistant against crosstalk from the adjacent track, thereby allowing a reduction in track pitch. Also in a normal magneto-optical recording medium not supporting super-resolution reproduction, the track pitch can be made finer than that in the conventional art by using a short-wavelength laser having a blue band. The track pitch can be further reduced by combining the CAD method and the short-wavelength laser. In this description, a laser having a wavelength of 300 to 500 nm is defined as the short-wavelength laser.

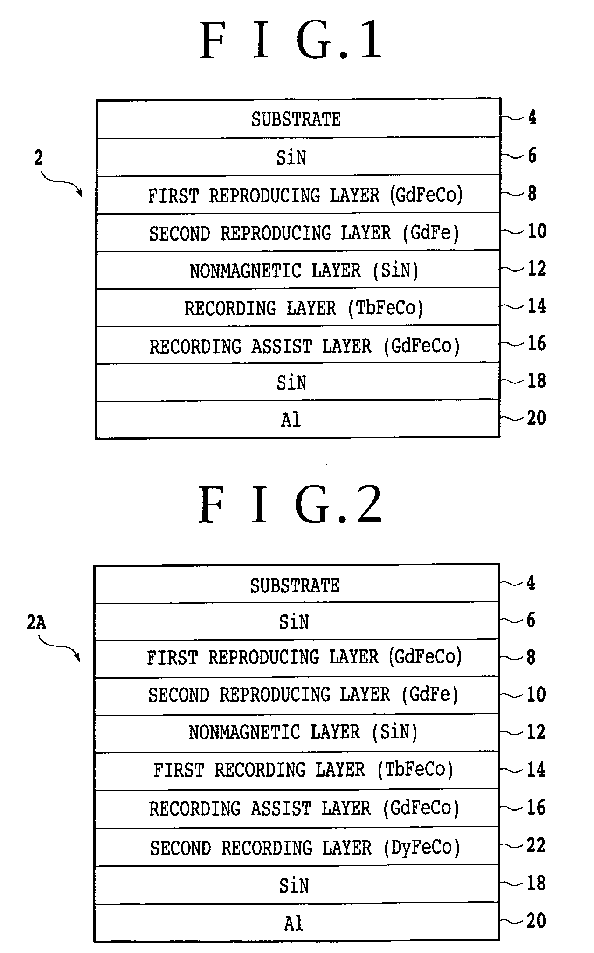

The configuration of a conventional CAD type magneto-optical recording medium 2 will now be description with reference to FIG. 1. Reference numeral 4 denotes a transparent substrate. Provided on the transparent substrate 4 are a base dielectric layer 6 formed of SiN, a first reproducing layer 8 formed of GdFeCo, a second reproducing layer 10 formed of GdFe, a nonmagnetic layer 12 formed of SiN, and a recording layer 14 formed of TbFeCo in this order. Further provided on the recording layer 14 are a recording assist layer 16 formed of GdFeCo, an overcoat layer 18 formed of SiN, and a metal layer 20 containing Al in this order. Each of the first reproducing layer 8 and the second reproducing layer 10 has an axis of easy magnetization in the longitudinal direction at room temperature. In contrast, the recording layer 14 has an axis of easy magnetization in the perpendicular direction at room temperature in the case of a single layer.

Reproduction from the CAD medium as shown in FIG. 1 is performed by inverting the direction of magnetization in the first and second reproducing layers 8 and 10 with the magnetic field from the recording layer 14. As mentioned above, in the CAD medium, longitudinal magnetization in the reproducing layer at the other portion except the aperture portion is not detected, and it is resistant against crosstalk from the adjacent track, thereby allowing a reduction in track pitch. However, it has become apparent that reducing the track pitch for the purpose of increasing the recording density actually causes an increase in jitter on a reproduction track in the case that recorded marks are present on the adjacent track. The jitter is a variation in mark length. Although a target value for the mark length is predetermined in an optical disk, the mark length actually varies to be deviated from the target value. If the deviation of the mark length becomes greater than a certain threshold, an error occurs in reproduction. Letting T(ns) and $\sigma$ denote the threshold and the normal distribution of variations in mark length, respectively, the jitter is defined as $100 \times \sigma/(T \times 2^{1/2})$ % where $2^{1/2}$ is the correction coefficient according to a reproduction method.

This increase in jitter remarkably appears in recording marks on a subject track after recording marks on the adjacent track. This problem also arises in a normal magneto-optical recording medium rather than the MSR medium when the track pitch is reduced. In particular, this problem becomes remarkable in the case of using a recording layer formed of a transition metal dominant (TM rich) material.

In the CAD medium, the direction of magnetization in the reproducing layer is inverted by a magnetic field from the recording layer. Accordingly, it is necessary to use a transition metal dominant (TM rich) material having large magnetization (Ms) as the recording layer. However, when such a transition metal dominant material having large magnetization (Ms) is used as the recording layer, a magnetic field is generated also from the marks recorded on the recording layer of the adjacent track not subjected to reproduction, and this magnetic field has an influence upon a recording operation on the adjacent track, thus causing an increase in jitter. Such an increase in jitter may be avoided by reducing the content of FeCo in the recording layer, that is, by adjusting the composition of the recording layer toward a rare-earth element dominant (RE rich) composition. However, in the case of an RE rich recording layer, the marks recorded in the recording layer are not sufficiently transferred to the reproducing layer, resulting in difficulty of reproduction.

Further, it has been found that a similar problem arises in concert with a reduction in track pitch in a normal magneto-optical recording medium when a recording layer formed of TbFeCo having a transition metal dominant (TM rich) composition is used for the purpose of improving a CN ratio or when a recording assist layer formed of GdFeCo having a transition metal dominant (TM rich) composition is added for the purpose of reducing an erasing magnetic field. Even though the recording layer has a composition near a compensation composition at room temperature, the composition becomes transition metal dominant (TM rich) in accordance with a temperature rise inside the magneto-optical disk drive up to about 50°C to 60°C, causing a similar problem.

Disclosure of the Invention

It is therefore an object of the present invention to provide a magneto-optical recording medium having a good jitter characteristic and allowing high-density recording.

In accordance with an aspect of the present invention, there is provided a magneto-optical recording medium including a substrate; a first recording layer provided on the substrate, the first recording layer containing Tb and FeCo as principal components, the first recording layer showing a compensation composition or transition metal dominance and perpendicular magnetization at room temperature; and a second recording layer provided on the first recording layer, the second recording layer having a compensation temperature of not less than 100°C and showing rare-earth element dominance and perpendicular magnetization at room temperature; the Curie temperatures Tc1 and Tc2 of the first and second recording layers, the coercive forces Hc1 and Hc2 of the first and second recording layers at room temperature, and the thicknesses t1 and t2 of the first and second recording layers satisfying the relations of $60°C < Tc2 < Tc1$ and $Hc1 \cdot t1 > Hc2 \cdot t2$.

Preferably, the relation of $60°C < Tc2 < Tc1 - 50°C$ is satisfied. The second recording layer contains Dy and FeCo as principal components. Alternatively, the second recording layer contains FeCo and an alloy selected from the group consisting of GdTb, TbDy, DyGd, TbNd, DyNd, GdNd, and TbGdDy as principal components.

Preferably, the composition of the first recording layer is $Tb_x(Fe_{100-y}Co_y)$ where $15 \leqq x \leqq 20$ and $8 \leqq y \leqq 18$. The composition of the second recording layer is $Dy_x(Fe_{100-y}Co_y)$ where $24 \leqq x \leqq 30$ and $5 \leqq y \leqq 20$.

Preferably, the magneto-optical recording medium further includes a recording assist layer arranged in magnetic contact with the first recording layer, the recording assist layer being formed of GdFeCo. The recording assist layer is transition metal dominant (TM rich) at room temperature. The Curie temperature Tca of the recording assist layer satisfies the relation of $Tc2 < Tc1 < Tca$.

According to the present invention, it is possible to provide a magneto-optical recording medium having a good jitter characteristic and allowing high-density recording even in the case that marks are previously recorded on the tracks adjacent to a recording track with a fine track pitch.

In accordance with another aspect of the present invention, there is provided a magneto-optical disk device capable of recording/reproducing information to/from a magneto-optical recording medium, including an optical head for irradiating the magneto-optical recording medium with a laser beam; and a photodetector for generating a reproduction signal from reflected light reflected on the magneto-optical recording medium; the magneto-optical recording medium including a substrate; a first recording layer provided on the substrate, the first recording layer containing Tb and FeCo as principal components, the first recording layer showing a compensation composition or transition metal dominance and perpendicular magnetization at room temperature; and a second recording layer provided on the first recording layer, the second recording layer having a compensation temperature of not less than 100°C and showing rare-earth element dominance and perpendicular magnetization at room temperature; the Curie temperatures $Tc1$ and $Tc2$ of the first and second recording layers, the coercive forces $Hc1$ and $Hc2$ of the first and second recording layers at room temperature, and the thicknesses $t1$ and $t2$ of the first and second recording layers satisfying the relations of $60°C < Tc2 < Tc1$ and $Hc1 \cdot t1 > Hc2 \cdot t2$.

Brief Description of Drawings

FIG. 1 is a schematic sectional view showing the configuration of a CAD type magneto-optical recording medium in the conventional art;
FIG. 2 is a schematic sectional view showing the configuration of a magneto-optical recording medium according to a first preferred embodiment of the present invention;
FIG. 3 is a graph showing the dependence of jitter upon the content of Dy in the second recording layer;
FIG. 4 is a graph showing the dependence of jitter upon the content of Co in the second recording layer;
FIG. 5 is a graph showing the dependence of jitter upon the content of Tb in the first recording layer;
FIG. 6 is a graph showing the dependence of jitter upon the content of Co in the first recording layer;
FIG. 7 is a graph showing the dependence of recording power upon the content of Co in the first recording layer;
FIG. 8 is a schematic sectional view showing the configuration of a magneto-optical recording medium according to a second preferred embodiment of the present invention;
FIG. 9 is a schematic sectional view showing the configuration of a magneto-optical recording medium according to a third preferred embodiment of the present invention;
FIG. 10 is a schematic sectional view showing the configuration of a magneto-optical recording medium according to a fourth preferred embodiment of the present invention;
FIG. 11 is a schematic sectional view showing the configuration of a magneto-optical recording medium according to a fifth preferred embodiment of the present invention;
FIG. 12 is a schematic sectional view showing the configuration of a magneto-optical recording medium according to a sixth preferred embodiment of the present invention;
FIG. 13 is a schematic sectional view showing the configuration of a magneto-optical recording medium according to a seventh preferred embodiment of the present invention;
FIG. 14 is a schematic sectional view showing the configuration of a magneto-optical recording medium according to an eighth preferred embodiment of the present invention;
FIG. 15 is a block diagram of a magneto-optical disk drive according to the present invention; and
FIG. 16 is a schematic view showing the internal structure of the magneto-optical disk drive in which an MO cartridge is loaded.

Best Mode for Carrying out the Invention

Some preferred embodiments of the present invention will now be described with reference to the drawings. In the following description of the preferred embodiments, substantially the same parts as those of the conventional art shown in FIG. 1 are denoted by the same reference numerals. Referring to FIG. 2, there is shown a schematic sectional view of a magneto-optical recording medium 2A according to a first preferred embodiment of the present invention. Reference numeral 4 denotes a transparent substrate for land/groove recording in which the spacing (track pitch) between any adjacent ones of the lands and the grooves is 0.40 μm and the level difference (groove depth) between the lands and the grooves is 30 nm. The substrate 4 is formed of glass or polycarbonate, for example.

Provided on the substrate 4 are a base dielectric layer 6 formed of SiN, a first reproducing layer 8 formed of GdFeCo, a second reproducing layer 10 formed of GdFe, and a nonmagnetic layer 12 formed of SiN in this order. Further provided on the nonmagnetic layer 12 are a first recording layer 14 formed of TbFeCo, a recording assist layer 16 formed of GdFeCo, a second recording layer 22 formed of DyFeCo, an overcoat layer 18 formed of SiN, and a metal layer 20 containing Al in this order. The magneto-optical recording medium 2A according to this preferred embodiment is a CAD type MSR medium such that recorded marks in the first and second recording layers 14 and 22 are transferred to the second reproducing layer 10 and the first reproducing layer 8 by magnetostatic coupling. Each of the first reproducing layer 8 and the second reproducing layer 10 has an axis of easy magnetization in the longitudinal direction at room temperature. In contrast, each of the first recording layer 14, the recording assist layer 16, and the second recording layer 22 has an axis of easy magnetization in the perpendicular direction at room temperature in the case of a single layer.

A manufacturing method for the magneto-optical recording medium 2A according to this preferred embodiment will now be described. The substrate 4 for land/groove recording was inserted into a stationary opposed type sputtering device having a plurality of deposition chambers (sputter chambers) each capable of achieving an ultimate vacuum of $5 \times 10^{-5}$ pascal (Pa) or less. First, the substrate 4 was carried into the first chamber in which an Si target was mounted, and Ar gas and $N_2$ gas were introduced into the first chamber to deposit the SiN layer having a thickness of 40 nm by reactive sputtering.

The substrate 4 was next moved into the second chamber in which a $Gd_{30}Fe_{56}Co_{14}$ alloy target was mounted, and Ar gas was introduced into the second chamber to deposit the first reproducing layer 8 formed of $Gd_{30}Fe_{56}Co_{14}$ having an RE rich composition at room temperature (the compensation temperature is not lower than room temperature) by DC sputtering. The Curie temperature of the first reproducing layer 8 is not lower than 300°C. The substrate 4 was next moved into the third chamber in which a Gd target and an Fe target were mounted, and Ar gas was introduced into the third chamber to deposit the second reproducing layer 10 formed of $Gd_{15}Fe_{85}$ by DC sputtering. The thickness of the second reproducing layer 10 was set to 7 nm. The composition is expressed as at% unless other specified.

The substrate 4 was next returned to the first chamber to deposit the SiN nonmagnetic block layer 12 having a thickness of 1.5 nm. The substrate 4 was next moved into the fourth chamber, in which a Tb target and an FeCo target were simultaneously discharged to deposit the first recording layer 14 formed of TbFeCo. The thickness of the first recording layer 14 was set to 40 nm. The content of Tb was changed by changing the ratio of applied power between the Tb target and the FeCo target. Further, the content of Co was changed by using various FeCo targets having different content ratios. Thus, a plurality of samples for the first recording layer 14 formed of TbFeCo were prepared. The substrate 4 was next moved into the fifth chamber in which a $Gd_{20}Fe_{64}Co_{16}$ alloy target was mounted, and Ar gas was introduced into the fifth chamber to deposit the recording assist layer 16 formed of $Gd_{20}Fe_{64}Co_{16}$ by DC sputtering. The thickness of the recording assist layer 16 was set to 5 nm. The recording assist layer 16 has perpendicular magnetization at room temperature, that is, an axis of easy magnetization in the perpendicular direction at room temperature.

The substrate 4 was next moved into the sixth chamber, in which a Dy target and an FeCo target were simultaneously discharged by DC sputtering to deposit the second recording layer 22 formed of DyFeCo. The thickness of the second recording layer 22 was set to 15 nm. The content of Dy was changed by changing the ratio of applied power between the Dy target and the FeCo target. Further, the content of Co was changed by using various FeCo targets having different content ratios. Thus, a plurality of samples for the second recording layer 22 formed of DyFeCo were prepared. The substrate 4 was next returned to the first chamber to deposit the SiN overcoat layer 18 having a thickness of 10 nm. The substrate 4 was next moved into the seventh chamber in which an AlTi alloy target containing 1.5 wt% of Ti was mounted to deposit the AlTi metal layer 20 having a thickness of 60 nm. Finally, a UV curing resin coating was formed on the metal layer 20 to obtain the magneto-optical recording medium 2A shown in FIG. 2.

By using a laser beam having a wavelength of 405 nm (the numerical aperture NA of an objective lens = 0.55), random pattern optical modulation recording with 1-7 modulation was performed under the conditions that the linear velocity was 7.5 m/s and the mark length was 0.20 μm/bit to measure a jitter. The jitter is a variation in mark length. The erasing magnetic field was set to 200 oersteds (Oe) or $200 \times 10^3/4\pi$ (A/m), and the recording magnetic field was set to 200 oersteds (Oe) or $200 \times 10^3/4\pi$ (A/m).

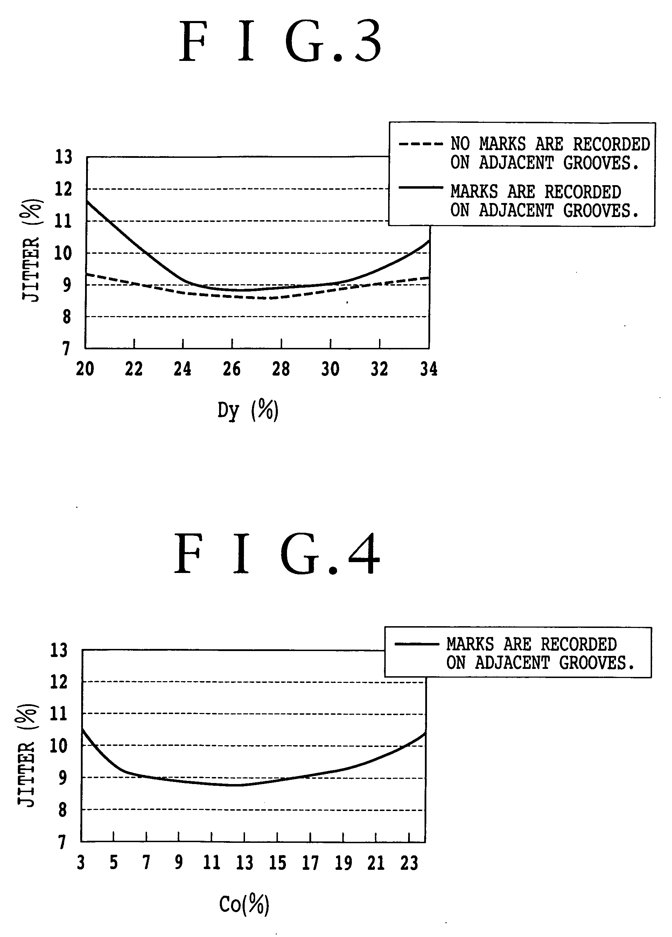

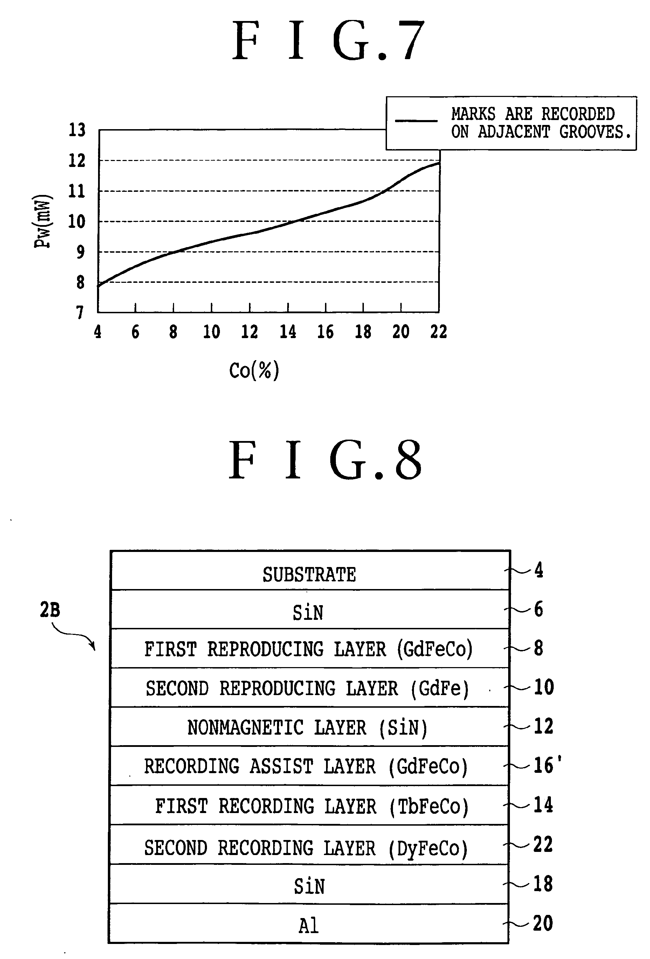

FIGS. 3 to 6 show the results of measurement of the jitter in various conditions. The jitter measurement was performed on the land, and random pattern marks were preliminarily recorded on the grooves adjacent to this land. In FIG. 3, the broken line shows the jitter in the condition where no marks were recorded on the grooves adjacent to this land for the purpose of comparison. FIG. 7 shows the result of measurement of the dependence of recording power Pw upon the Co content in the first recording layer 14.

As shown by the broken line in FIG. 3, in the case that no marks are recorded on the groove tracks adjacent to the subject land track, a jitter of about 9% is obtained regardless of the Dy content in the second recording layer 22. In contrast, when marks are recorded on the subject land track in the condition where marks are preliminarily recorded on the groove tracks adjacent to this land track, the jitter increases with the Dy content less than 24% or greater than 30%. The composition of the first recording layer 14 is $Tb_{18}Fe_{68}Co_{14}$, and the Curie temperature is 210°C.

As a comparison, a sample for the conventional medium shown in FIG. 1 was prepared by forming the recording layer 14 from $Tb_{18}Fe_{68}Co_{14}$ and excluding the second recording layer, and jitter measurement was performed on this sample. As the result of this jitter measurement, a good jitter of 8.5% was obtained in the case that no marks were recorded on the adjacent groove tracks, but the jitter increased up to 11.8% in the case that marks were recorded on the adjacent groove tracks. Accordingly, it should be understood that a good jitter can be obtained without the influence of the marks recorded on the adjacent groove tracks by adding the second recording layer 22 of DyFeCo and adjusting the content ratio of DyFeCo to a proper value.

When the Dy content becomes less than 24%, the composition of the second recording layer 22 becomes near a compensation composition, so that the magnetization (Ms) generating from the second recording layer 22 opposite in direction to the magnetization (Ms) in the first recording layer 14 becomes smaller. When the Dy content is further reduced, the transition metal in the second recording layer 22 whose magnetization direction is the same as that in the first recording layer 14 becomes dominant, so that the total magnetization (Ms) in the first and second recording layers 14 and 22 at room temperature becomes too large. As a result, the influence of the magnetic field from the marks recorded on the adjacent groove tracks becomes large to cause an increase in jitter. On the other hand, when the Dy content becomes greater than 30%, the second recording layer 22 strongly tends to become a longitudinally magnetized film. Since the magneto-optical recording medium is a perpendicular recording medium, increasing the easiness of magnetization in the longitudinal direction causes degradation in recording characteristic, resulting in an increase in noise. Accordingly, the jitter is increased. For the above reasons, the Dy content is preferably set in the range of 24% to 30%, thereby canceling the magnetization in the first recording layer 14 and the magnetization in the second recording layer 22 each other near room temperature. As a result, the total magnetization (Ms) can be reduced to thereby obtain a good recording characteristic.

FIG. 4 shows the dependence of jitter upon the Co content in the second recording layer 22. As apparent from FIG. 4, it is preferable to set the Co content in the second recording layer 22 in the range of 5% to 20%. If the Co content is less than 5%, the Curie temperature of the second recording layer 22 lowers to near room temperature, so that the magnetization (Ms) opposite in direction to the magnetization (Ms) in the first recording layer 14 becomes smaller. As a result, the effect of canceling the magnetization (Ms) in the first recording layer 14 is reduced. On the other hand, if the Co content is greater than 20%, the Curie temperature of the second recording layer 22 becomes 160°C or more, which is near the Curie temperature of the first recording layer 14. As a result, the recording characteristic is degraded to cause an increase in jitter. The Curie temperature Tc1 of the first recording layer 14 and the Curie temperature Tc2 of the second recording layer 22 preferably satisfy the relation of $60°C < Tc2 < Tc1$, more preferably $60°C < Tc2 < Tc1 - 50°C$.

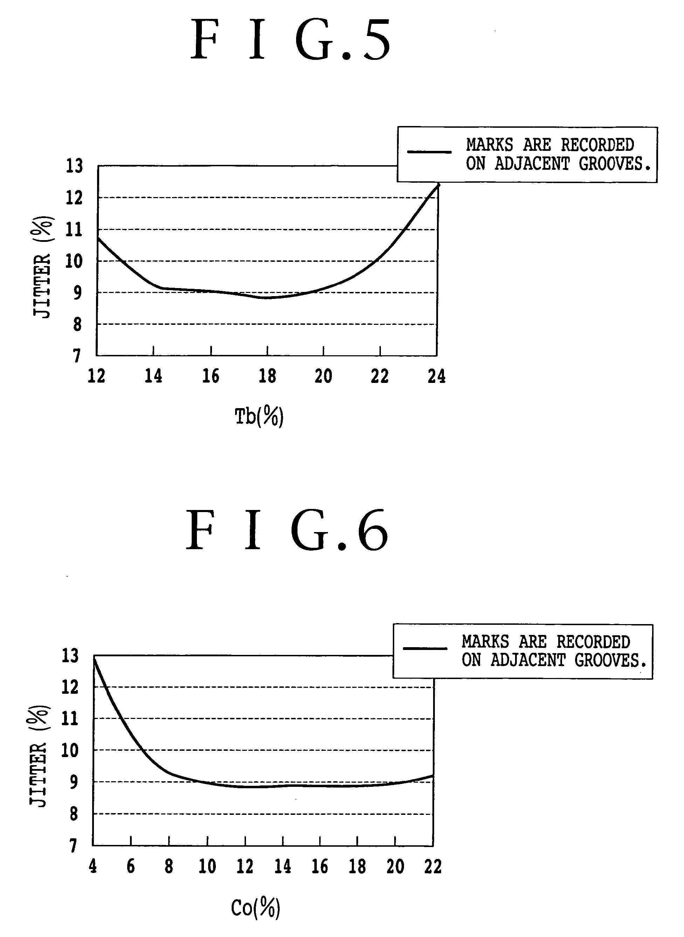

FIG. 5 shows the dependence of jitter upon the Tb content in the first recording layer 14. As apparent from FIG. 5, when the Tb content is less than 15%, showing that the transition metal is greatly dominant, the recording characteristic is degraded to cause an increase in jitter. On the other hand, if the Tb content is greater than 20%, the composition of the first recording layer 14 becomes a compensation composition or rare-earth element dominant, so that the magnetization (Ms) is reduced to cause a difficulty of CAD reproduction. Further, the recording characteristic is degraded to cause an increase in jitter. Accordingly, the Tb content in the first recording layer 14 is preferably set in the range of 15% to 20%.

FIG. 6 shows the dependence of jitter upon the Co content in the first recording layer 14. If the Co content in the first recording layer 14 is less than 8%, the Curie temperature of the first recording layer 14 becomes 150°C or less, which is almost the same as the Curie temperature of the second recording layer 22. As a result, the recording characteristic is degraded to cause an increase in jitter. On the other hand, if the Co content in the first recording layer 14 is greater than 18%, the laser power required for recording is increased up to not less than 7 mW as an allowable value as apparent from FIG. 7. Further, since a high-power laser is required, power consumption is increased. Accordingly, the Co content in the first recording layer 14 is preferably set in the range of 8% to 18%.

In summary, the first recording layer 14 is preferably a perpendicularly magnetized film having a compensation composition or transition metal dominant composition at room temperature, and the second recording layer 22 is preferably a perpendicularly magnetized film having a compensation temperature of not less than 100°C to not greater than the vicinity of the Curie temperature and having a rare-earth element dominant composition at room temperature. The vicinity of the Curie temperature mentioned above is defined as the Curie temperature ±20°C. Further, the Curie temperatures Tc1 and Tc2 of the first and second recording layers 14 and 22, the coercive forces Hc1 and Hc2 of the first and second recording layers 14 and 22 at room temperature, and the thicknesses t1 and t2 of the first and second recording layers 14 and 22 preferably satisfy the relations of $60°C < Tc2 < Tc1$ and $Hc1 \cdot t1 > Hc2 \cdot t2$. More preferably, the relation of $60°C < Tc2 < Tc1 - 50°C$ is satisfied.

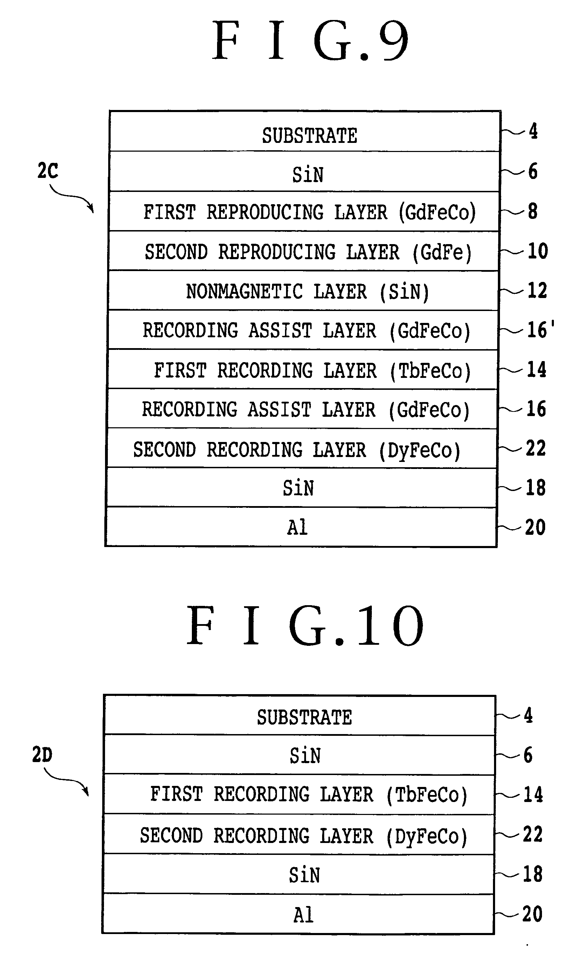

The present invention is applicable to any magneto-optical recording medium such that the first and second recording layers 14 and 22 satisfy the above-mentioned relations, and is not limited to the CAD type magneto-optical recording medium 2A shown in FIG. 2. For example, the present invention is also applicable to a magneto-optical recording medium 2B according to a second preferred embodiment shown in FIG. 8. The magneto-optical recording medium 2B has a configuration such that a recording assist layer 16' is interposed to the substrate 4 side in contact with the first recording layer 14. Further, the present invention is also applicable to a magneto-optical recording medium 2C according to a third preferred embodiment shown in FIG. 9. The magneto-optical recording medium 2C has a configuration such that recording assist layers 16 and 16' are provided on both sides of the first recording layer 14. The magneto-optical recording media 2B and 2C according to the second and third preferred embodiments mentioned above are CAD type MSR media as similar to the magneto-optical recording medium 2A according to the first preferred embodiment shown in FIG. 2.

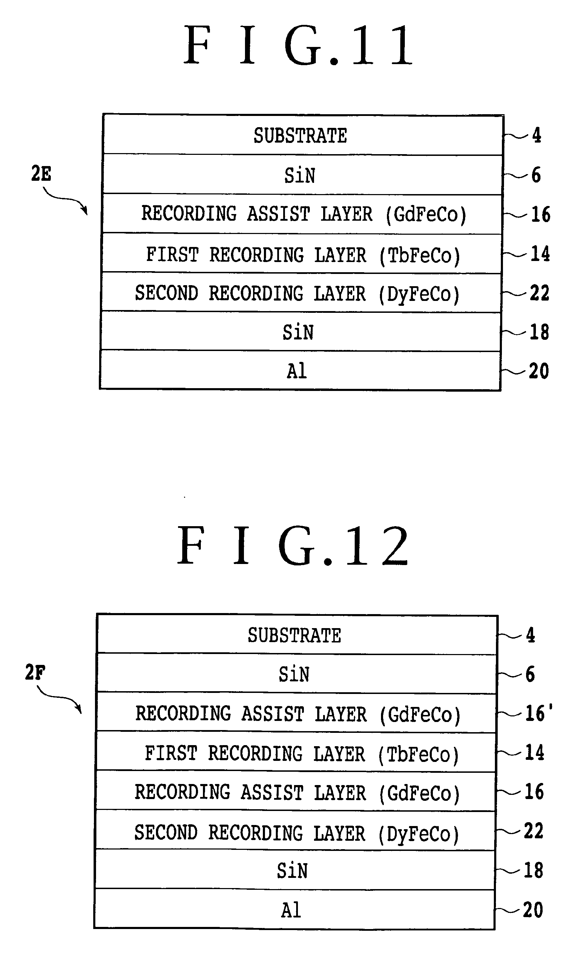

Further, the present invention is also applicable to normal magneto-optical recording media 2D to 2F each having no reproducing layer according to fourth to sixth preferred embodiments shown in FIGS. 10 to 12, respectively. In the fifth preferred embodiment shown in FIG. 11, a recording assist layer 16 is interposed between the first recording layer 14 and the base dielectric layer 6. In the sixth preferred embodiment shown in FIG. 12, recording assist layers 16' and 16 are provided on both sides of the first recording layer 14.

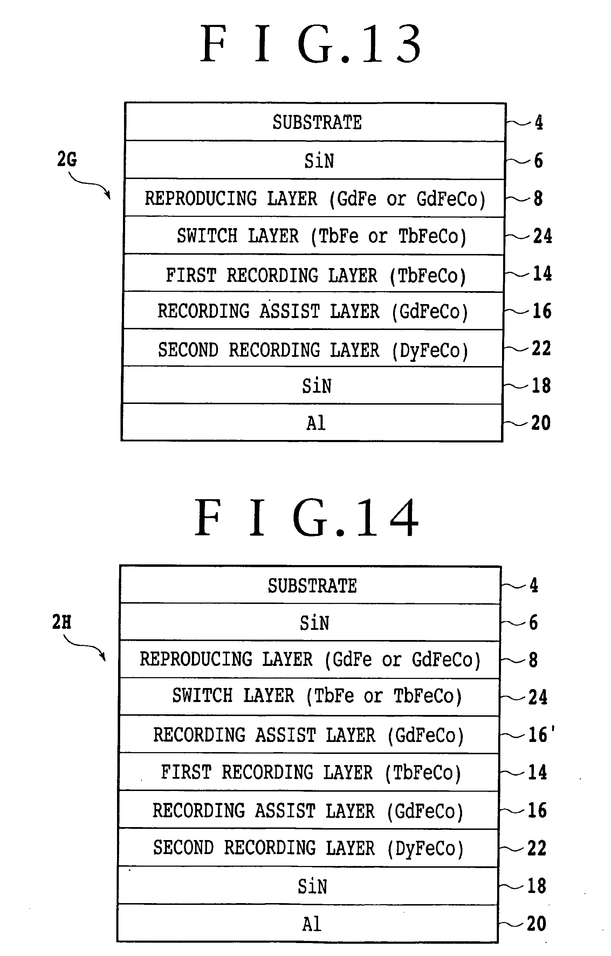

Further, a similar effect can be obtained also in a magneto-optical recording medium capable of performing super-resolution reproduction or expansive reproduction of such a type that a reproducing layer is exchange-coupled to a recording layer through a magnetic switch layer rather than a nonmagnetic block layer formed of SiN or the like. FIGS. 13 and 14 show this type of magneto-optical recording media 2G and 2H according to seventh and eighth preferred embodiments of the present invention. Each of these magneto-optical recording media 2G and 2H includes a switch layer 24 interposed between the reproducing layer 8 and the first recording layer 14. The switch layer 24 is formed of TbFe or TbFeCo, and has a Curie temperature lower than that of each of the reproducing layer 8 and the first recording layer 14. These magneto-optical recording media 2G and 2H are front aperture detection (FAD) type magnetically induced super-resolution media (MSR media) or expansive reproduction media such as a domain wall displacement detection (DWDD) type and a magnetic amplifying magneto-optical system (MAMMOS). Such a magneto-optical recording medium capable of performing expansive reproduction can exhibit a similar effect.

Further, Dy in the second recording layer 22 may be replaced by an alloy selected from the group consisting of GdTb, TbDy, DyGd, TbNd, DyNd, GdNd, and TbGdDy. Also in this case, a similar effect can be obtained. Further, a nonmagnetic element may be added to each magnetic layer, so as to improve the durability. Further, the content ratio of each material may be suitably selected.

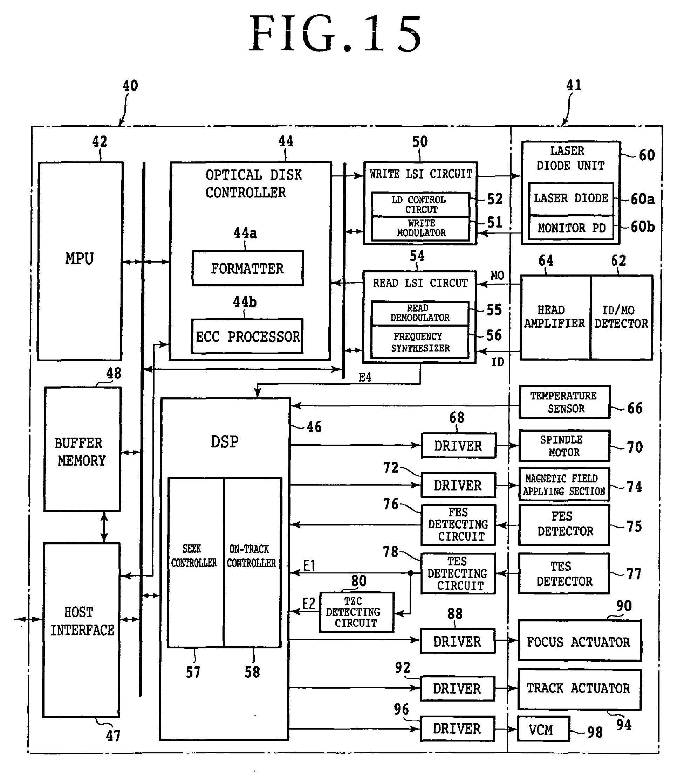

Referring to FIG. 15, there is shown a circuit block diagram of a magneto-optical disk drive according to the present invention. The magneto-optical disk drive shown in FIG. 15 is composed generally of a control unit 40 and an enclosure 41. The control unit 40 includes an MPU 42 for performing general control of the magneto-optical disk drive, a host interface 47 for exchanging commands and data between the magneto-optical disk drive and the host equipment, an optical disk controller (ODC) 44 for performing processing required for read/write of data on a magneto-optical disk medium, a digital signal processor (DSP) 46, and a buffer memory 48. The buffer memory 48 is used commonly for the MPU 42, the optical disk controller 44, and the host interface 47.

The optical disk controller 44 includes a formatter 44a and an ECC processor 44b. In write access, the formatter 44a divides NRZ write data into the sectors of the medium to create a recording format. The ECC processor 44b creates an ECC code per sector write data and adds it to the recording format. The ECC processor 44b further creates a CRC code as required and adds it to the recording format. Further, the ECC processor 44b converts the sector data after ECC encoded into a 1-7RLL code, for example.

The formatter 44a creates a logical block address (LBA) used in accessing from an OS. The LBA is preliminarily programmed according to the recording capacity of the magneto-optical disk medium, and this program is preliminarily stored in the form of firmware in the formatter 44a. The formatter 44a further preliminarily stores a program for converting the LBA into a track address and a sector address. Further, a defective sector number found in performing physical formatting of the magneto-optical disk medium is also stored into the formatter 44a.

In read access, sector read data demodulated is subjected to 1-7RLL inversion, and the ECC processor 44b performs CRC check and error detection and correction. Further, the formatter 44a links NRZ data in sectors and transfers a stream of NRZ read data to the host equipment. The optical disk controller 44 controls a write LSI circuit 50. The write LSI circuit 50 has a write modulator 51 and a laser diode control circuit 52. An output from the laser diode control circuit 52 is supplied to a laser diode unit 60 provided in an optical unit of the enclosure 41.

The laser diode unit 60 has a laser diode 60a and a monitoring photodetector 60b. The write modulator 51 converts write data into PPM recording or PWM recording format data. As a magneto-optical disk for performing recording/reproduction by using the laser diode unit 60, i.e., a rewritable magneto-optical (MO) cartridge medium, the magneto-optical disk drive of the present invention may use any one of different kinds of MO cartridge media having recording capacities of 128 MB, 230 MB, 540 MB, 640 MB, 1.3 GB, and the magneto-optical recording medium of the present invention. If the numerical aperture (NA) of the objective lens is not less than 0.55, the magneto-optical disk is downwardly compatible with the magneto-optical recording medium of the present invention by using a blue laser having a wavelength of 405 nm.

Of these MO cartridge media, the 128 MB and 230 MB MO cartridge media adopt pit position modulation (PPM) recording such that data is recorded according to the presence or absence of a mark on the medium. Further, the recording format of the medium is CAV (Constant Angular Velocity). On the other hand, the 540 MB, 640 MB, and 1.3 GB MO cartridge media capable of higher-density recording adopt pulse width modulation (PWM) recording such that data is recorded so as to correspond to the edges of a mark, i.e., the leading edge and trailing edge of a mark. Further, a zone CAV is adopted as the recording format of the medium.

Thus, the magneto-optical disk drive of the present invention can also support various kinds of MO cartridge media having recording capacities of 128 MB, 230 MB, 540 MB, 640 MB, and 1.3 GB. Accordingly, when any one of these kinds of MO cartridge media is loaded into the magneto-optical disk drive, an ID portion formed as a plurality of prepits at a header portion of the medium is first read, and the kind of the medium is then recognized from the spacing of the prepits by the MPU 42, which in turn notifies the write LSI 50 of the result of this recognition. Further, when a CAD type MO cartridge is loaded into the magneto-optical disk drive, a predetermined value is set for this medium by the MPU 42, and this set value is supplied to the write LSI 50.

In the case of the 128 MB or 230 MB medium, the sector write data from the optical disk controller 44 is converted into PPM recording data by the write modulator 51, whereas in the case of the 540 MB, 640 MB, 1.3 GB medium, or the magneto-optical recording medium of the present invention, the sector write data is converted into PWM recording data by the write modulator 51. The PPM recording data or PWM recording data obtained by the write modulator 51 is supplied to the laser diode control circuit 52, and the laser diode 60a is driven to write the data onto the medium.

A read LSI circuit 54 has a read demodulator 55 and a frequency synthesizer 56. Return light from the medium irradiated with a laser beam output from the laser diode 60a is detected by an ID/MO detector 62, and is input as an ID signal and an MO signal through an optical amplifier 64 into the read LSI circuit 54. Address information or the like at the header is detected as the ID signal, and a series of data on the identifier, track address, and sector address is reproduced to thereby allow recognition of the position of a beam spot on the medium.

The read demodulator 55 in the read LSI circuit 54 is provided with circuit functions such as an AGC circuit, filter, and sector mark detecting circuit. The read demodulator 55 creates a read clock and read data from the input ID signal and the input MO signal, and demodulates the PPM recorded data or PWM recorded data to the original NRZ data. A zone CAV is adopted as the control of a spindle motor 70. Accordingly, the MPU 42 performs setting and control of a frequency dividing ratio for generation of a clock frequency corresponding to the zone, to the frequency synthesizer 56 incorporated in the read LSI circuit 54.

The frequency synthesizer 56 is a PLL circuit having a programmable frequency divider, which generates a reference clock as a read clock having a predetermined inherent frequency according to a zone (band) position on the medium. More specifically, the frequency synthesizer 56 is configured by a PLL circuit having a programmable frequency divider, which generates a reference clock having a frequency fo according to a frequency dividing ratio (m/n) set according to a zone number by the MPU 42. The frequency fo is given by:

$$fo = (m/n) \cdot fi$$

In the above expression, the denominator n of the frequency dividing ratio (m/n) represents an inherent value according to the kind of the medium, i.e., 128 MB, 230 MB, 540 MB, 640 MB, 1.3 GB medium, or the magneto-optical recording medium of the present invention. On the other hand, the numerator m of the frequency dividing ratio (m/n) represents a value changing according to the zone position on the medium. This value is preliminarily stored as table information of values corresponding to zone numbers on each medium.

The read LSI circuit 54 further outputs an MOXID signal E4 to the DSP 46. The MOXID signal E4 is a signal having an H level (bit 1) in an MO region as a data region and an L level (bit 0) in an ID region where the prepits are formed. That is, this signal indicates physical positions of the MO region and the ID region on the recording track of the medium. The read data demodulated in the read LSI 54 is supplied to the optical disk controller 44, and then undergoes 1-7RLL inversion and CRC check and ECC processing by the encoding function of the ECC processor 44b to restore the NRZ sector data. Further, the NRZ sector data is linked to the stream of the NRZ read data in the formatter 44a, and thereafter transferred through the buffer memory 48 and the host interface 47 to the host equipment.

A detection signal from a temperature sensor 66 provided in the enclosure 41 is supplied through the DSP 46 to the MPU 42. The MPU 42 controls optimum values of read, write, and erase optical powers in the laser diode control circuit 52 according to an environmental temperature inside the disk drive detected by the temperature sensor 66. The laser diode control circuit 52 controls the write power to 6.0 mW, for example, and controls the read power to 2.0 mW, for example. Optical modulation recording is carried out for the 128 MB medium to the 1.3 GB medium, whereas both optical modulation recording and magnetic modulation recording may be adopted for the magneto-optical recording medium of the present invention. The MPU 42 further controls a spindle motor 70 provided in the enclosure 41 through the DSP 46 and a driver 68. Because the recording format of the MO cartridge medium is a zone CAV, the spindle motor 70 is driven to rotate the disk medium at a constant speed of 4500 rpm, for example. The linear velocity of the medium is 7.5 m/s both in recording data and in reproducing data.

The MPU 42 further controls a magnetic field applying section 74 provided in the enclosure 41 through the DSP 46 and a driver 72. The magnetic field applying section 74 is located opposite to the beam irradiation side of the MO cartridge loaded into the disk drive, and functions to supply an external magnetic field to the medium. The DSP 46 has a servo function for positioning the laser beam from the laser diode 60a with respect to the medium, and includes a seek controller 57 for seeking the laser beam to a target track to position the beam spot on the target track and an on-track controller 58 for making the laser beam trace the center of the target track.

To realize the servo function of the DSP 46, an FES detector 75 for detecting the return light from the medium irradiated with the laser beam is provided in the optical unit in the enclosure 41, and an FES detecting circuit 76 produces a focus error signal from an output from the FES detector 75 to input the focus error signal into the DSP 46. Further, a TES detector 77 for detecting the return light from the medium is provided in the optical unit in the enclosure 41, and a TES detecting circuit 78 produces a tracking error signal E1 from an output from the TES detector 77 to input the tracking error signal E1 into the DSP 46.

The tracking error signal E1 is input into a TZC (Track Zero Cross) detecting circuit 80, in which a track zero cross pulse E2 is produced. The track zero cross pulse E2 from the TZC detecting circuit 80 is input into the DSP 46. The DSP 46 further controls to drive a focus actuator 90, lens actuator 94, and VCM 98 through drivers 88, 92, and 96, respectively, to control the position of the beam spot on the medium.

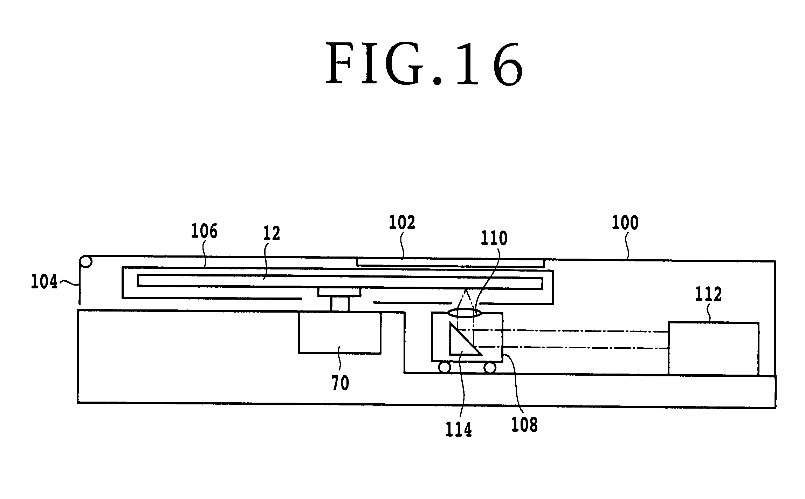

Referring to FIG. 16, there is shown a schematic configuration of the enclosure 41 of the magneto-optical disk drive. The spindle motor 70 is provided in a housing 100. When an MO cartridge 106 is inserted into the housing 100 through an inlet door 104, the MO medium 12 in the MO cartridge 106 is chucked to a hub of a rotating shaft of the spindle motor 70, thus loading the MO medium 12. A carriage 108 is provided below the MO medium 12 loaded into the disk drive so as to be movable across the tracks of the MO medium by the VCM 98. An objective lens 110 and a beam raising prism 114 are mounted on the carriage 108.

The laser beam from the laser diode 60a provided in a fixed optical system 112 is reflected by the beam raising prism 114 to enter the objective lens 110. The laser beam is focused by the objective lens 110 onto the recording surface of the MO medium 12. The objective lens 110 is controlled to move along its optical axis by the focus actuator 90 in the enclosure 41 shown in FIG. 15. The objective lens 110 is further controlled to move across a given number of tracks (e.g., tens of tracks) of the MO medium 12, i.e., in the radial direction thereof, by the track actuator 94 in the enclosure 41 shown in FIG. 15. A magnetic head mechanism 102 for applying an external magnetic field to the MO medium 12 is provided above the MO medium 12 loaded into the disk drive. The magnetic head mechanism 102 may be provided by a flying or contact type magnetic head slider or an electromagnet.

Industrial Applicability

According to the present invention as described above in detail, it is possible to provide a magneto-optical recording medium suitable for high-density recording with a fine track pitch which can obtain a good jitter characteristic even in the case that marks are previously recorded on the tracks adjacent to a recording track, by multilayering a recording layer. While the present invention is effective especially in a land/groove recording method, the present invention is also effective in a land recording method or groove recording method with a fine track pitch. Further, it is possible to provide a magneto-optical disk drive suitable for recording/reproduction of data to/from such a magneto-optical recording medium.

## Claims

1. A magneto-optical recording medium comprising:

   a substrate;
   a first recording layer provided on said substrate, said first recording layer containing Tb and FeCo as principal components, said first recording layer showing a compensation composition or transition metal dominance and perpendicular magnetization at room temperature; and
   a second recording layer provided on said first recording layer, said second recording layer having a compensation temperature of not less than 100°C and showing rare-earth element dominance and perpendicular magnetization at room temperature;
   the Curie temperatures Tc1 and Tc2 of said first and second recording layers, the coercive forces Hc1 and Hc2 of said first and second recording layers at room temperature, and the thicknesses t1 and t2 of said first and second recording layers satisfying the relations of 60°C < Tc2 < Tc1 and Hc1 · t1 > Hc2 · t2.

2. The magneto-optical recording medium according to claim 1, wherein the relation of 60°C < Tc2 < Tc1 - 50°C is satisfied.

3. The magneto-optical recording medium according to claim 1, wherein said second recording layer contains Dy and FeCo as principal components.

4. The magneto-optical recording medium according to claim 1, wherein said second recording layer contains FeCo and an alloy selected from the group consisting of GdTb, TbDy, DyGd, TbNd, DyNd, GdNd, and TbGdDy as principal components.

5. The magneto-optical recording medium according to claim 1, wherein the composition of said first recording layer is $Tb_x(Fe_{100-y}Co_y)$ where $15 \leqq x \leqq 20$ and $8 \leqq y \leqq 18$.

6. The magneto-optical recording medium according to claim 3, wherein the composition of said second recording layer is $Dy_x(Fe1_{00-y}Co_y)$ where $24 \leqq x \leqq 30$ and $5 \leqq y \leqq 20$.

7. The magneto-optical recording medium according to claim 1, further comprising a recording assist layer arranged in magnetic contact with said first recording layer, said recording assist layer being formed of GdFeCo.

8. The magneto-optical recording medium according to claim 7, wherein said recording assist layer is transition metal dominant at room temperature.

9. The magneto-optical recording medium according to claim 7, wherein the Curie temperature Tca of said recording assist layer satisfies the relation of Tc2 < Tc1 < Tca.

10. The magneto-optical recording medium according to claim 1, further comprising:

a reproducing layer interposed between said substrate and said first recording layer, said reproducing layer containing GdFeCo as principal components, said reproducing layer showing rare-earth element dominance and longitudinal magnetization at room temperature; and a nonmagnetic block layer interposed between said reproducing layer and said first recording layer.

11. The magneto-optical recording medium according to claim 10, further comprising a recording assist layer arranged in magnetic contact with said first recording layer, said recording assist layer being formed of GdFeCo and transition metal dominant at room temperature.

12. The magneto-optical recording medium according to claim 1, further comprising:

a reproducing layer interposed between said substrate and said first recording layer, said reproducing layer containing GdFeCo as principal components, said reproducing layer showing rare-earth element dominance and longitudinal magnetization at room temperature; and a magnetic switch layer interposed between said reproducing layer and said first recording layer, said magnetic switch layer containing TbFe as principal components.

13. The magneto-optical recording medium according to claim 12, further comprising a recording assist layer arranged in magnetic contact with said first recording layer, said recording assist layer being formed of GdFeCo and transition metal dominant at room temperature.

14. The magneto-optical recording medium according to claim 1, further comprising:

a reproducing layer interposed between said substrate and said first recording layer, said reproducing layer containing GdFeCo as principal components, said reproducing layer showing rare-earth element dominance and longitudinal magnetization at room temperature; and a magnetic switch layer interposed between said reproducing layer and said first recording layer, said magnetic switch layer containing TbFeCo as principal components.

15. The magneto-optical recording medium according to claim 14, further comprising a recording assist layer arranged in magnetic contact with said first recording layer, said recording assist layer being formed of GdFeCo and transition metal dominant at room temperature.

16. A magneto-optical storage device capable of recording/reproducing information to/from a magneto-optical recording medium, comprising:

an optical head for irradiating said magneto-optical recording medium with a laser beam; and a photodetector for generating a reproduction signal from reflected light reflected on said magneto-optical recording medium; said magneto-optical recording medium comprising:

a substrate; a first recording layer provided on said substrate, said first recording layer containing Tb and FeCo as principal components, said first recording layer showing a compensation composition or transition metal dominance and perpendicular magnetization at room temperature; and a second recording layer provided on said first recording layer, said second recording layer having a compensation temperature of not less than 100°C and showing rare-earth element dominance and perpendicular magnetization at room temperature; the Curie temperatures Tc1 and Tc2 of said first and second recording layers, the coercive forces Hc1 and Hc2 of said first and second recording layers at room temperature, and the thicknesses t1 and t2 of said first and second recording layers satisfying the relations of 60°C < Tc2 < Tc1 and Hc1 · t1 > Hc2 · t2.

# F I G.1

| SUBSTRATE | 4 |
|---|---|
| SiN | 6 |
| FIRST REPRODUCING LAYER (GdFeCo) | 8 |
| SECOND REPRODUCING LAYER (GdFe) | 10 |
| NONMAGNETIC LAYER (SiN) | 12 |
| RECORDING LAYER (TbFeCo) | 14 |
| RECORDING ASSIST LAYER (GdFeCo) | 16 |
| SiN | 18 |
| Al | 20 |

2

# F I G.2

| SUBSTRATE | 4 |
|---|---|
| SiN | 6 |
| FIRST REPRODUCING LAYER (GdFeCo) | 8 |
| SECOND REPRODUCING LAYER (GdFe) | 10 |
| NONMAGNETIC LAYER (SiN) | 12 |
| FIRST RECORDING LAYER (TbFeCo) | 14 |
| RECORDING ASSIST LAYER (GdFeCo) | 16 |
| SECOND RECORDING LAYER (DyFeCo) | 22 |
| SiN | 18 |
| Al | 20 |

2A

# F I G.3

Legend:
- - - - NO MARKS ARE RECORDED ON ADJACENT GROOVES.
──── MARKS ARE RECORDED ON ADJACENT GROOVES.

JITTER (%) vs Dy (%)

# F I G.4

Legend:
──── MARKS ARE RECORDED ON ADJACENT GROOVES.

JITTER (%) vs Co(%)

# F I G.5

# F I G.6

# FIG.7

| | MARKS ARE RECORDED ON ADJACENT GROOVES. |
|---|---|

y-axis: Pw(mW), values 7, 8, 9, 10, 11, 12, 13

x-axis: Co(%), values 4, 6, 8, 10, 12, 14, 16, 18, 20, 22

# FIG.8

2B

| | |
|---|---|
| SUBSTRATE | 4 |
| SiN | 6 |
| FIRST REPRODUCING LAYER (GdFeCo) | 8 |
| SECOND REPRODUCING LAYER (GdFe) | 10 |
| NONMAGNETIC LAYER (SiN) | 12 |
| RECORDING ASSIST LAYER (GdFeCo) | 16' |
| FIRST RECORDING LAYER (TbFeCo) | 14 |
| SECOND RECORDING LAYER (DyFeCo) | 22 |
| SiN | 18 |
| Al | 20 |

# F I G . 9

| | |
|---|---|
| SUBSTRATE | ~4 |
| SiN | ~6 |
| FIRST REPRODUCING LAYER (GdFeCo) | ~8 |
| SECOND REPRODUCING LAYER (GdFe) | ~10 |
| NONMAGNETIC LAYER (SiN) | ~12 |
| RECORDING ASSIST LAYER (GdFeCo) | ~16' |
| FIRST RECORDING LAYER (TbFeCo) | ~14 |
| RECORDING ASSIST LAYER (GdFeCo) | ~16 |
| SECOND RECORDING LAYER (DyFeCo) | ~22 |
| SiN | ~18 |
| Al | ~20 |

2C

# F I G . 1 0

| | |
|---|---|
| SUBSTRATE | ~4 |
| SiN | ~6 |
| FIRST RECORDING LAYER (TbFeCo) | ~14 |
| SECOND RECORDING LAYER (DyFeCo) | ~22 |
| SiN | ~18 |
| Al | ~20 |

2D

# F I G.11

| | |
|---|---|
| SUBSTRATE | ～4 |
| SiN | ～6 |
| RECORDING ASSIST LAYER (GdFeCo) | ～16 |
| FIRST RECORDING LAYER (TbFeCo) | ～14 |
| SECOND RECORDING LAYER (DyFeCo) | ～22 |
| SiN | ～18 |
| Al | ～20 |

2E

# F I G.12

| | |
|---|---|
| SUBSTRATE | ～4 |
| SiN | ～6 |
| RECORDING ASSIST LAYER (GdFeCo) | ～16' |
| FIRST RECORDING LAYER (TbFeCo) | ～14 |
| RECORDING ASSIST LAYER (GdFeCo) | ～16 |
| SECOND RECORDING LAYER (DyFeCo) | ～22 |
| SiN | ～18 |
| Al | ～20 |

2F

# F I G.13

| | |
|---|---|
| SUBSTRATE | ~4 |
| SiN | ~6 |
| REPRODUCING LAYER (GdFe or GdFeCo) | ~8 |
| SWITCH LAYER (TbFe or TbFeCo) | ~24 |
| FIRST RECORDING LAYER (TbFeCo) | ~14 |
| RECORDING ASSIST LAYER (GdFeCo) | ~16 |
| SECOND RECORDING LAYER (DyFeCo) | ~22 |
| SiN | ~18 |
| Al | ~20 |

2G

# F I G.14

| | |
|---|---|
| SUBSTRATE | ~4 |
| SiN | ~6 |
| REPRODUCING LAYER (GdFe or GdFeCo) | ~8 |
| SWITCH LAYER (TbFe or TbFeCo) | ~24 |
| RECORDING ASSIST LAYER (GdFeCo) | ~16' |
| FIRST RECORDING LAYER (TbFeCo) | ~14 |
| RECORDING ASSIST LAYER (GdFeCo) | ~16 |
| SECOND RECORDING LAYER (DyFeCo) | ~22 |
| SiN | ~18 |
| Al | ~20 |

2H

# FIG.15

# FIG.16

EP 1 524 658 A1

# INTERNATIONAL SEARCH REPORT

| International application No. |
|---|
| PCT/JP02/08252 |

### A. CLASSIFICATION OF SUBJECT MATTER
Int.Cl$^7$  G11B11/105

According to International Patent Classification (IPC) or to both national classification and IPC

### B. FIELDS SEARCHED
Minimum documentation searched (classification system followed by classification symbols)
Int.Cl$^7$  G11B11/10-11/105

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-176140 A  (Mitsubishi Chemical Corp.),<br>29 June, 2001 (29.06.01),<br>Full text; all drawings<br>(Family: none) | 1-7,9,10,16<br>8,11-15 |
| Y | JP 2001-84658 A  (Hitachi Maxell, Ltd.),<br>30 March, 2001 (30.03.01),<br>Par. Nos. [0016], [0017], [0043]; Fig. 1<br>(Family: none) | 8,11,13,15 |
| Y | JP 7-244877 A  (Fujitsu Ltd.),<br>19 September, 1995 (19.09.95),<br>Par. No. [0037]; Fig. 1<br>& DE 94018355 U1       & EP 664541 A1<br>& US 5623458 A1 | 12 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    15 November, 2002 (15.11.02) | Date of mailing of the international search report<br>    26 November, 2002 (26.11.02) |
|---|---|
| Name and mailing address of the ISA/<br>    Japanese Patent Office | Authorized officer |
| Facsimile No. | Telephone No. |

Form PCT/ISA/210 (second sheet) (July 1998)

## INTERNATIONAL SEARCH REPORT

International application No.

PCT/JP02/08252

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 7-307040 A (Fujitsu Ltd.), 21 November, 1995 (21.11.95), Par. No. [0039]; Fig. 4 & US 5691072 A1 | 14 |
| A | JP 2001-143337 A (Hitachi Maxell, Ltd.), 25 May, 2001 (25.05.01), Full text; all drawings (Family: none) | 1-16 |
| A | JP 2002-123986 A (Matsushita Electric Industrial Co., Ltd.), 26 April, 2002 (26.04.02), Par. Nos. [0101] to [0121]; Figs. 9, 10 (Family: none) | 1-16 |

Form PCT/ISA/210 (continuation of second sheet) (July 1998)